# EUROPEAN PATENT APPLICATION

(11) **EP 4 703 158 A1**
(43) Date of publication of application: **04.03.2026**
(21) Application number: 25190301.9
(22) Date of filing: 17.07.2025
(51) Int. Cl.: B60C 23/00, B60C 23/04, F16K 3/24

(54) **SCOOTER**

(30) Priority: 03.09.2024 CN 202422163786 U
(71) Applicant: 3KM Pte. Ltd, Singapore 199591 (SG)
(72) Inventor: SHI, Yi, 199591 SINGAPORE (SG); WANG, Xiajun, 199591 SINGAPORE (SG)
(74) Representative: Santarelli

(57) **Abstract**

The present application provides a scooter including a wheel(s), a gas tank, and a pressure gauge. Each wheel includes a hub and a tire. The gas tank is disposed on the hub. The pressure gauge includes a pressure measurement assembly, a valve assembly, and a pressure control assembly. The pressure measurement assembly is connected with a lumen of the tire to detect a target pressure of air in the lumen. The valve assembly is connected with the lumen and the gas tank. The valve assembly includes a second gas channel. The pressure control assembly is electrically connected with the pressure measurement assembly and the valve assembly, is in communication connection with a control unit of the scooter, and is configured to periodically transmit the target pressure to the control unit and control the valve assembly to open or close the second gas channel based on a target instruction sent by the control unit. The control unit is disposed on the scooter, is in communication connection with the pressure control assembly, and is configured to receive the target pressure and send the target instruction to the valve assembly based on the target pressure.

## Description

### Technical Field

The present application relates to the technical field of transportation vehicles, and in particular, to a scooter.

### Background of the Invention

As the component of the scooter that makes contact with the ground, the wheels play a crucial role in ensuring the scooter's safety and enhancing riding comfort.. However, a change in wheel pressure may have a significant impact on the performance of the scooter. An inappropriate wheel pressure can increase the wear of the wheel, reduce the maneuverability of the scooter, and may cause a traffic accident in extreme cases. Slow air release often occurs during long-term use of the wheel, resulting in insufficient wheel pressure.

At present, a major one of wheel inflation solutions available on the market is manual inflation. Manual inflation requires a user to regularly check the wheel pressure and re-inflate the wheel as needed, which is a burden for the user. Moreover, users may forget to check the tire pressure and inflate due to their busy schedules, thereby increasing the risk associated with using the scooter.

### Summary of the Invention

The present application provides a scooter. A wheel can be automatically inflated by a pressure gauge such that the wheel is always maintained in its optimal state without user intervention.

To achieve the above purpose, the present application provides the following technical solutions.

In a first aspect, embodiments of the present application provide a scooter, including: a plurality of wheels, where each of the wheels includes a hub and a tire; a body including a foot deck, where the body is rotatably connected to each of the wheels; a gas tank disposed on the hub; and a pressure gauge disposed on the hub and connected with the gas tank and a lumen of the tire. The pressure gauge includes: a pressure measurement assembly connected with the lumen to detect a target pressure of air in the lumen; a valve assembly connected to the lumen and the gas tank and including a second gas channel; a pressure control assembly electrically connected with the pressure measurement assembly and the valve assembly and in communication connection with a control unit of the scooter, and configured to periodically transmit the target pressure to the control unit and control the valve assembly to open or close the second gas channel based on a target instruction sent by the control unit; and the control unit disposed on the scooter and in communication connection with the pressure control assembly and configured to receive the target pressure and send the target instruction to the valve assembly based on the target pressure.

According to some embodiments of the present application, when the target pressure is lower than a threshold pressure, the target instruction instructs the pressure control assembly to open the second gas channel such that air in the gas tank is guided into the lumen.

According to some embodiments of the present application, when the target pressure is higher than or equal to the threshold pressure, the target instruction instructs the pressure control assembly to close the second gas channel such that the air in the gas tank is prevented from being guided into the lumen.

According to some embodiments of the present application, when the target pressure is lower than a threshold pressure and a decreasing rate of the target pressure is lower than a preset rate, the target instruction instructs the pressure control assembly to open the second gas channel such that the air in the gas tank is guided into the lumen.

According to some embodiments of the present application, when the decreasing rate of the target pressure is higher than the preset rate, the control unit alarms to prompt a rider that air leaks from the tire.

According to some embodiments of the present application, when the target pressure is lower than a threshold pressure, the pressure control assembly detects the target pressure at a first interval; and when the target pressure is higher than the threshold pressure, the pressure control assembly detects the target pressure at a second interval; where the first interval is shorter than the second interval.

According to some embodiments of the present application, the pressure control assembly is wirelessly connected with the control unit by means of a short-range data transmission technology.

According to some embodiments of the present application, the valve assembly further includes: a first gas channel including a first end and a second end, where the first end is communicated with the gas tank; the second gas channel forms a preset angle with the first gas channel; the second gas channel includes a third end and a fourth end; the second end is communicated with the third end; and the fourth end is communicated with the lumen; and a piston slidably disposed at least partially within the second gas channel and movable between a first position and a second position. In the second position, the piston is located within the second gas channel such that the second gas channel is blocked from the first gas channel and the second gas channel is closed; and in the first position, the piston leaves the second gas channel such that the second gas channel is communicated with the first gas channel and the second gas channel is opened.

According to some embodiments of the present application, the valve assembly further includes an elastic element and an electromagnet; the elastic element is configured to provide an elastic force to push the piston to the second position; and the electromagnet is configured to provide an electromagnetic force after being powered on to push the piston to the first position.

According to some embodiments of the present application, the first end is detachably connected with the gas tank; the second end and the third end are disposed integrally; and the fourth end is detachably connected with the lumen.

According to some embodiments of the present application, the preset angle is 90°.

According to some embodiments of the present application, the valve assembly further includes: a limiting rod fixedly connected with the piston; and a limiting groove adapted to the limiting rod and including a first limit and a second limit, where when the piston moves to the first position, the limiting rod is located at the first limit; and when the piston moves to the second position, the limiting rod is located at the second limit.

According to some embodiments of the present application, the pressure measurement assembly includes: a pressure measurement channel communicated with the lumen; and a pressure sensor disposed on a side of the pressure measurement channel that faces the pressure gauge and configured to detect an air pressure in the pressure measurement channel.

According to some embodiments of the present application, the hub includes a first mounting opening communicated with the lumen; and the pressure gauge further includes: a second mounting opening connected with the first mounting opening; the second gas channel and the pressure measurement channel are disposed within the second mounting opening, where the second gas channel and the pressure measurement channel are spaced apart.

In conclusion, this description presents a scooter. A target pressure detected by a pressure measurement assembly is transmitted to a control unit by a pressure control assembly. The control unit sends a target instruction to the pressure control assembly based on the target pressure. The pressure control assembly controls a valve assembly to open or close a second gas channel based on the target instruction sent by the control unit. Thus, continuous monitoring of the target pressure is realized, and when the target pressure is found to drop, a reinflation measure is automatically taken without user intervention, thereby ensuring that the wheel is always in the optimal state.

### Brief Description of the Drawings

To describe the technical solutions in the embodiments of the present application more clearly, the accompanying drawings required for describing the embodiments are briefly described below. Apparently, the accompanying drawings in the following description show merely some embodiments of the present application, and a person of ordinary skill in the art may derive other drawings from these accompanying drawings without creative efforts.
FIG. 1 illustrates a structural schematic diagram of a scooter provided according to some embodiments of the present application;
FIG. 2A is a structural schematic diagram of a wheel assembly provided according to some embodiments of the present application in a first perspective;
FIG. 2B is a structural schematic diagram of a wheel assembly provided according to some embodiments of the present application in a second perspective;
FIG. 2C is a structural schematic diagram of a wheel assembly provided according to some embodiments of the present application in a third perspective;
FIG. 3A illustrates a right view of the connection between a wheel and a pressure gauge provided according to some embodiments of the present application;
FIG. 3B illustrates a sectional view of FIG. 3A along face A-A according to some embodiments of the present application;
FIG. 4A illustrates a front view of connection of a wheel and a pressure gauge provided according to some embodiments of the present application;
FIG. 4B illustrates a sectional view of FIG. 4A along face B-B according to some embodiments of the present application; and
FIGs. 5A-5B illustrate schematic diagrams of driving a piston to move by a piston driver provided according to some embodiments of the present application.

### Detailed Description of Embodiments

The following description provides specific application scenarios and requirements of this specification, with the purpose of enabling those skilled in the art to make and use the content in this specification. For those skilled in the art, various partial modifications to the disclosed embodiments are obvious, and without departing from the spirit and scope of this specification, the general principles defined herein can be applied to other embodiments and application. Therefore, the specification is not limited to the embodiments, but is the consistent with the broadest scope of claims.

The terms used herein are merely intended to describe specific examples or embodiments, rather than to limit the present application. For example, unless expressly stated otherwise, the singular forms "a", "an" and "this" used herein may also include plural forms. In the present application, the terms "include" and/or "comprise" refer to the existence of an associated integer, step, operation, element, component and/or group, without excluding the existence of one or more other features, integers, steps, operations, elements, components and/or groups. In other words, other features, integers, steps, operations, elements, components and/or groups may be added to the system/method.

In the present application, "X includes at least one of A, B, or C" means X includes at least A, X includes at least B, or X includes at least C. In other words, X may include only any combination of A, B, and C, or include any combination of A, B, and C and other possible content/element. The any combination of A, B, and C may be A, B, C, AB, AC, BC, or ABC.

In the present application, unless otherwise explicitly specified, an association relationship between structures may be a direct association relationship or an indirect association relationship. For example, for the description "A is connected to B", unless it is explicitly described that A is directly connected to B, it will be construed as that A may be directly connected to B or indirectly connected to B. For another example, for the description "A is over B", unless it is explicitly described that A is directly above B (A and B are adjacent and A is above B), it will be construed as that A may be directly above B, or A may be indirectly over B (A and B are spaced apart by other element and A is above B), and so on.

In consideration of the following description, in the present application, these and other features, the operations and functions of related elements of the structure, as well as the economic efficiency of the combination and manufacturing of components can be significantly improved. The description also includes figures and texts with reference to the figures in this specification, all of which form part of this specification. However, it should be clearly understood that the drawings are merely intended for illustration and description purposes, rather than to limit the scope of the present application. It should be understood that the accompanying drawings are not drawn to scale.

In the present description, the short-distance transportation vehicle refers to various devices and tools for meeting individuals' transportation demands within a relatively short distance range. Such devices typically have portability, maneuverability, and environmental friendliness, are suitable for short distance traveling within cities or certain areas, and can effectively replace or supplement traditional vehicles, thereby reducing traffic congestion and the environmental pollution. Specific examples of personal traveling devices include scooters (manual scooters and electric scooters), bicycles (manual bicycles and electric bicycles), self-balanced vehicles, and other similar light vehicles. The present description describes the above-mentioned short-distance transportation vehicle by taking a scooter as an example. However, it will be understood by a person skilled in the art that other types of short-distance transportation vehicles are also applicable to the invention of the present application without departing from the spirit thereof.

Scooters, as short-distance transportation vehicles, have been widely used in people's everyday life. Scooters, as a mode of short-distance transportation, are widely used in people's daily lives. The scooters in this application can be utilized in various scenarios, such as personal commuting, traveling to and from work or school, quick movement within campuses, sightseeing in tourist areas, logistics delivery, shared mobility services, recreational activities, and handling daily family chores, among many other situations. This specification does not impose any limitation on the use scenarios of the scooter.

Scooters may be divided into different types based on the use scenario and wheel quantity. For example, a two-wheeled scooter has two wheels located at the front and rear, allowing children to push off the ground with their feet to propel themselves forward. For example, a three-wheeled scooter with an additional wheel on the basis of the two-wheeled scooter, in which two wheels may be arranged at the front and one wheel is arranged at the back, thereby improving the stability, can be applied to scenarios such as leisure and entertainment activities and mobility service. Alternatively, one wheel may be arranged at the front and two wheels are arranged at the back, allowing more flexible turning and a higher speed, and such a scooter can be applied to rapid moving within campus, going to work or commuting to school, riding instead of walk for an individual, etc. For ease of description, the following description is made by taking a three-wheeled scooter with two wheels at the front and one wheel at the back as an example.

Usually, when a user uses the scooter, the user determines whether a wheel needs to be reinflated by observing the appearance of the wheel with naked eyes or pressing a side of the wheel using a hand. When the appearance of the wheel is flat or the wheel is soft to press, the user determines that the wheel needs to be reinflated. A valve cap on a wheel air nozzle is then screwed off using a spanner or a hand, followed by securely connecting an air nozzle of an external inflator to the wheel air nozzle and starting manual reinflation. When the user observes that the appearance of the wheel is full or the wheel is hard to press, the user determines that the reinflation of the wheel needs to be stopped. On the one hand, such a wheel reinflation solution requires the user to regularly check the wheel pressure and to actively perform reinflation. It is possible that the user forgets to regularly check the wheel pressure or ignore this, thus causing the wheel to have insufficient air pressure for a long time. On the other hand, if the manual reinflation solution is used to reinflate the wheel, it is difficult for the user to control a volume of reinflation, leading to over-inflation or under-inflation of the wheel.

In view of this, the present application provides a scooter that enables regular detection of a target pressure in a lumen of the wheel and allows a valve assembly to be controlled based on the target pressure to open or close a gas channel to complete reinflation. Such a wheel reinflation solution allows continuous monitoring of the target pressure, and when the target pressure is found to drop, enables an automatic reinflation measure without user intervention, thereby ensuring that the wheel is always in an optimal state.

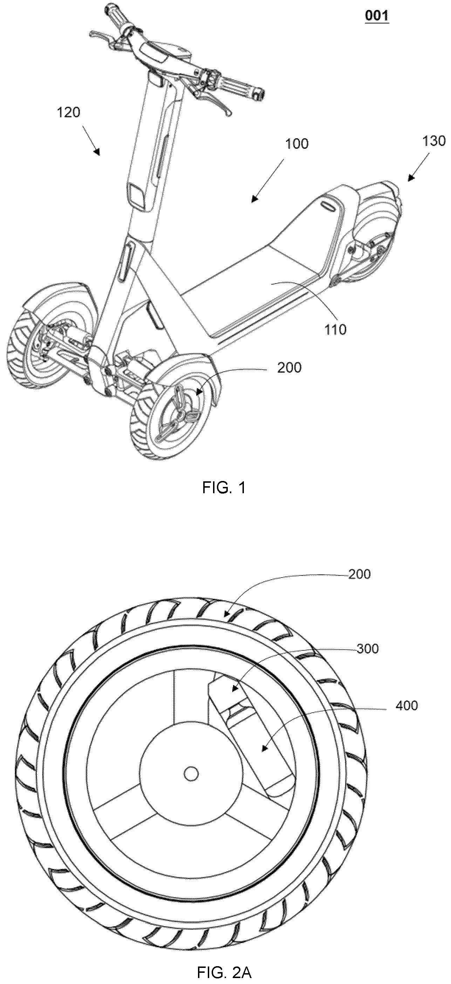

FIG. 1 illustrates a structural schematic diagram of a scooter 001 provided according to some embodiments of the present application. The scooter 001 includes a body 100, a front wheel assembly 120, and a rear wheel assembly 130. In some embodiments, the scooter 001 may further include a battery assembly (not shown in the figure).

In different application scenarios, the body 100 may have various structures. For example, as shown in FIG. 1, the body 100 may include a foot deck 110 for carrying a user. In particular, the foot deck 110 may serve to carry the feet of the user. The user can drive thee scooter 001 by standing on the foot deck 110. In some embodiments, the body 100 may also include other components, which are not limited herein. The body 100 may be made of a metal material, such as a carbon steel material, an aluminum alloy material, a titanium alloy material, or a carbon fiber material. The body 100 may also be made of a combination of a plurality of different materials, which is not limited herein.

The body 100 is divided into a front end and a rear end. The front wheel assembly 120 is pivotably connected to the front end of the body 100. The rear wheel assembly 130 is rotatably connected to the rear end of the body 100. The front wheel assembly 120 includes a handle bar, a steering tube, a fork, and at least one front wheel. The rear wheel assembly 130 includes at least one rear wheel, a fender, a brake, etc. The front wheel and the rear wheel may have a same configuration, including a tire, a hub, bearings, a pressure gauge, and a gas tank, etc.

The wheel 200 may be rotatably connected to the fork or the rear end of the body 100 so that the body 100 can move. The scooters 001 of different types may have different numbers of wheels. For example, a two-wheeled scooter 001 may be provided with two wheels; a three-wheeled scooter 001 may be provided with three wheels; a four-wheeled scooter 001 may be provided with four wheels; and so on. FIG. 1 of this description is described by taking the three-wheeled scooter 001 as an example.

The three-wheeled scooter 001 has three wheels 200, and the three wheels may be distributed along a longitudinal direction, including two front wheels and one rear wheel. The longitudinal direction may be a traveling direction of the scooter 001. The two front wheels may be symmetrically distributed on both sides of the scooter 001 so that the scooter 001 can stand independently. The rear wheel may be located in a central axis of the longitudinal direction of the scooter 001. The body 100 may be rotatably connected with the front wheel and the rear wheel. In the present application, each of the plurality of wheels 200 is an inflatable wheel. Air in the wheel is target air. Correspondingly, a pressure of the target air may be a target pressure.

FIG. 2A is a structural schematic diagram of a wheel assembly provided according to some embodiments of the present application in a first perspective. As shown in FIG. 2A, the assembly includes wheels 200, a pressure gauge 300, a gas tank 400, and a control unit (not shown in the figure).

The pressure gauge 300 may be disposed on the wheel 200 and connected with the wheel 200 to detect a target pressure of the wheel 200. In a scooter 001, there may be one or more pressure gauges 300. In some embodiments, each wheel is equipped with one pressure gauge 300. For example, in a three-wheeled scooter 001, each of three wheels may be equipped with a pressure gauge 300. The pressure gauge 300 may be in communication connection with the control unit and send the detected target pressure to the control unit. When the scooter 001 includes a plurality of pressure gauges 300, each pressure gauge 300 is in communication connection with the control unit to realize control of the control unit on the plurality of pressure gauges 300. The pressure gauge 300 may be a direct pressure gauge 300, i.e., a pressure gauge 300 for directly measuring the target pressure. The pressure gauge 300 may also be an indirect pressure gauge 300, i.e., a pressure gauge 300 for estimating the target pressure based on other parameters.

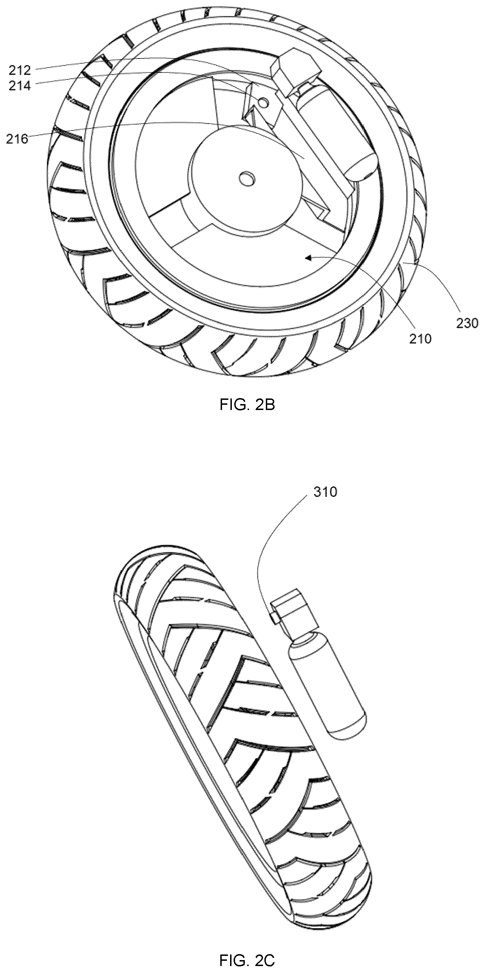

As shown in FIG. 2, the pressure gauge 300 is further connected with the gas tank 400 to control whether to allow air in the gas tank 400 to enter the wheel. The gas tank 400 may be disposed on the wheel 200 to inflate the wheel. There may be one or more gas tanks 400. For example, a plurality of gas tanks may be disposed on a hub to keep a dynamic balance when the wheel is rotating.

There may be a plurality of connection and combination manners of the pressure gauge 300 and the gas tank 400. In some embodiments, each pressure gauge 300 is equipped with one gas tank 400. For example, taking the three-wheeled scooter 001 as an example, three gas tanks 400 may be disposed on the scooter 001, and the three gas tanks 400 may be connected with three pressure gauges 300 on two front wheels and one rear wheel, respectively. In some embodiments, a plurality of gas tanks 400 may supply air to the same wheel via a pressure gauge 300.

It can be appreciated that the pressure of air in the gas tank 400 needs to be greater than the target pressure in the tire to avoid the air in the gas tank 400 from being injected into the wheel under the target pressure. The capacity of the gas tank 400 may be determined according to the requirement of the wheel. The material of the gas tank 400 may be a high strength metallic material, such as steel or aluminum alloy. This specification does not impose limitations on the capacity and the material of the gas tank 400.

The control unit is disposed on the scooter 001. In particular, the control unit may be disposed on the body 100, on the wheel 200, on the gas tank 400 and/or on the pressure gauge 300, etc. This specification does not impose a limitation on the position where the control unit is disposed. The control unit may be a central control system of the scooter 001, or may be a separate module independent of the central control.

The control unit may be in communication connection with the pressure gauge 300 so as to receive the target pressure detected by the pressure gauge 300 and send a target instruction to the pressure gauge 300 based on the target pressure. This specification does not impose a limitation on the type of the control unit. For example, the control unit may include: a microcontroller, a central processing unit (CPU), a field-programmable gate array (FPGA), a digital signal processor (DSP), an application-specific integrated circuit (ASIC), a microprocessor, an embedded system controller, a programmable logic controller (PLC), an intelligent controller, a remote control unit, and a multi-core processor. That is, the control unit can be any circuit or processor capable of performing one or more functions, or any combination thereof.

In some embodiments, the scooter 001 further includes a battery assembly. The battery assembly may provide power support to the above components, such as the pressure gauge 300 and the control unit. The battery assembly is independent and detachable so that the wheel 200 can be automatically inflated in a traveling process without stopping the scooter 001. The type of the battery assembly may be a disposable battery or a rechargeable battery. An output voltage of the battery assembly is compatible with electricity requiring components of the scooter 001. The capacity of the battery assembly is set according to an actual situation. This specifically does not impose limitations on the type, the output voltage, and the capacity of the battery assembly.

FIG. 2B is a structural schematic diagram of a wheel assembly provided according to some embodiments of the present application in a second perspective; and FIG. 2C is a structural schematic diagram of a wheel assembly provided according to some embodiments of the present application in a third perspective. As shown in FIG. 2B and FIG. 2C, each wheel 200 of a plurality of wheels on the scooter 001 includes a hub 210 and a tire 230. For the wheel 200 equipped with an automatic inflation system, the hub 210 includes a first mounting opening 214. The pressure gauge 300 includes a second mounting opening 310. In some embodiments, the hub 210 may further include a slot 216 for mounting the gas tank 400.

The hub 210 is a mounting base of the tire 230, and the tire 230 may be mounted on the hub 210. In particular, the hub 210 may be ring-shaped, and the tire 230 may be sleeved outside the hub 210 to be in direct contact with the ground. The material of the hub 210 may be a metallic material, such as aluminum alloy, steel, and titanium alloy. The material of the tire 230 may be a rubber material. This specification does not impose limitations on the materials of the hub 210 and the tire 230. The tire 230 and the hub 210 are hermetically mounted together. The tire has a lumen therein. The lumen may provide a place for storing target air for the tire 230. The target air may refer to air in the lumen. Correspondingly, the above-mentioned target pressure may refer to the pressure of the target air.

In some embodiments, the hub 210 may include a connecting portion 212. The hub 210 may be connected with the pressure gauge 300 via the connecting portion 212, such that the pressure gauge 300 is communicated with the lumen. In particular, the connecting portion 212 is of an internally hollow structure. When the hub 210 is connected with the pressure gauge 300, the connecting portion 212 is connected with the pressure gauge 300 such that the lumen is communicated with the pressure gauge 300, allowing air in the pressure gauge 300 to be exchanged with the target air in the lumen. It can be appreciated that, in some embodiments, the hub 210 may also be directly connected with the pressure gauge 300 without the connecting portion 212.

The hub 210 may include a first mounting opening 214. The first mounting opening 214 may be formed in the connecting portion 212. The hub 210 may be connected with a second mounting opening 310 of the pressure gauge 300 through the first mounting opening 214. It can be appreciated that when the hub 210 is not provided with the connecting portion 212, the first mounting opening 214 may be directly formed in the hub 210.

In some embodiments, the hub 210 may further include a slot 216 for mounting the pressure gauge 300 and the gas tank 400. In particular, the slot 216 is adapted to the pressure gauge 300 and the gas tank 400. The adaptation includes adaptation in shape and size. The pressure gauge 300 and the gas tank 400 may be mounted in the slot 216. It can be appreciated that a plurality of structures can be disposed on the hub 210 to carry the pressure gauge 300 and the gas tank 400. The slot 216 is only one of them. Those skilled in the art should understand that other carrying structures for the pressure gauge 300 and the gas tank 400 are also included within the protection scope of this specification.

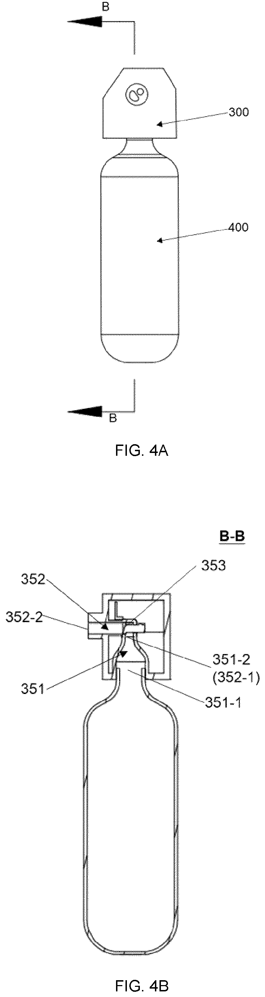

As previously described, the pressure gauge 300 may include the second mounting opening 310 (FIG. 4). The second mounting opening 310 is adapted to the first mounting opening 214 of the connecting portion 212 to realize detachable connection of the second mounting opening 310 and the first mounting opening 214. The adaptation may be adaptation in shape and size. The detachable connection manner may be at least one of threaded connection or snap-fit connection. With the connection of the second mounting opening 310 and the first mounting opening 214, the pressure gauge 300 is communicated with the lumen so that the target pressure of the target air in the lumen can be detected.

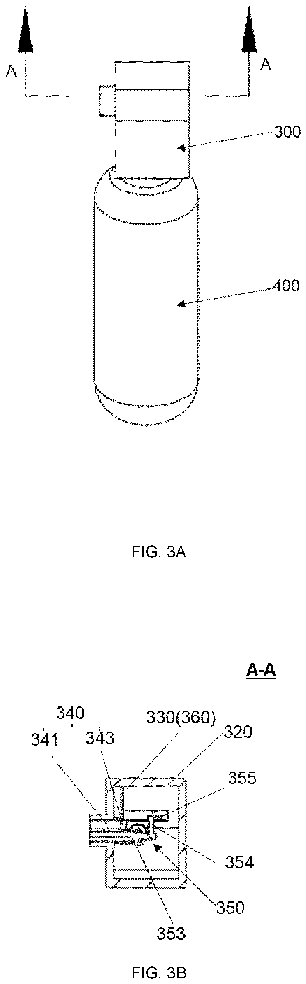

FIG. 3A illustrates a right view of connection of a wheel and a pressure gauge provided according to some embodiments of the present application; FIG. 3B illustrates a sectional view of FIG. 3A along face A-A according to some embodiments of the present application; FIG. 4A illustrates a front view of connection of a wheel and a pressure gauge provided according to some embodiments of the present application; and FIG. 4B illustrates a sectional view of FIG. 4A along face B-B according to some embodiments of the present application. As shown in FIG. 3A, FIG. 3B, FIG. 4A, and FIG. 4B, the pressure gauge 300 includes a housing 320, a circuit board 330, a pressure measurement assembly 340, a valve assembly 350, and a pressure control assembly 360.

The housing 320 may be a base of the pressure gauge 300. The housing 320 may be of an internally hollow structure. In particular, in some embodiments, the housing 320 may be of an integrally molded internally hollow structure. In some embodiments, the housing 320 may include at least two covers, such as an upper cover and a lower cover. The upper cover and the lower cover are mounted together to form the internally hollow structure. Other components of the pressure gauge 300 may be mounted with the housing 320 as the base. For example, the second mounting opening 310 may be disposed outside the housing 320 for connection with the first mounting opening 214 of the hub 210. The circuit board 330, the pressure measurement assembly 340, the valve assembly 350, and the pressure control assembly 360 may be mounted, at least in part, inside the housing 320, thereby realizing protection of the housing 320 for these components. The shape of the housing 320 may be any shape and the material of the housing 320 may be any material. This specification does not impose limitations on the shape and the material of the housing 320.

The circuit board 330 may be disposed inside the housing 320. The circuit board 330 is a mounting place for electronic elements in the pressure gauge 300. In particular, at least part of the pressure measurement assembly 340 and the pressure control assembly 360 may be mounted on the circuit board 330. The circuit board 330 may be configured to transmit data between the pressure control assembly 360, the pressure measurement assembly 340, and the valve assembly 350. This specification does not impose a limitation on the type of the circuit board 330. In particular, the circuit board 330 may include a flexible printed circuit (FPC), a printed circuit board (PCB), and a rigid-flex PCB.

The pressure measurement assembly 340 is a major component in the pressure gauge 300, and is configured to detect the target pressure of the target air in the lumen. The pressure measurement assembly 340 may be disposed, at least in part, inside the housing 320 and communicated with the lumen, and thus exposed to the target pressure of the lumen, thereby detecting the target pressure of the target air. As described above, the pressure gauge 300 may be a direct pressure gauge for directly measuring the target pressure, or may be an indirect pressure gauge for estimating the target pressure based on other parameters. When the pressure gauge 300 is the direct pressure gauge 300, the pressure measurement assembly 340 may be a direct pressure measurement assembly 340, i.e., a pressure measurement assembly 340 for directly measuring the target pressure. When the pressure gauge 300 is the indirect pressure gauge 300, the pressure measurement assembly 340 may be an indirect pressure measurement assembly 340, i.e., a pressure measurement assembly 340 for estimating the target pressure based on other parameters. For ease of description, the following description is made by taking as an example that the pressure gauge 300 is the direct pressure measurement assembly 340. In addition, the pressure measurement assembly 340 may also be electrically connected with the pressure control assembly 360 on the circuit board 330 to transmit the measured target pressure to the pressure control assembly 360.

As shown in FIG. 3B, the pressure measurement assembly 340 includes a pressure measurement channel 341 and a pressure sensor 343.

The pressure measurement channel 341 is disposed at least partially within the housing 320. In particular, the pressure measurement channel 341 may be disposed within the second mounting opening 310 and penetrate through the whole second mounting opening 310 until it abuts against the circuit board 330 inside the housing 320. When the pressure gauge 300 is connected with the lumen of the tire 230 through the second mounting opening 310, the pressure measurement channel 341 is also connected with the lumen so that the pressure measurement assembly 340 can be in direct contact with the target air in the lumen through the pressure measurement channel 341.

The pressure sensor 343 is disposed at an end of the pressure measurement channel 341 to measure the air pressure in the pressure measurement channel 341. In particular, the pressure sensor 343 may be disposed on a side of the pressure measurement channel 341 away from the lumen, such as on a sidewall of the pressure measurement channel 341 or at an end away from the lumen. Since the pressure measurement channel 341 is communicated with the lumen, the pressure sensor 343 can obtain the target pressure of the target air from the pressure of the air in the pressure measurement channel 341. The pressure sensor 343 may be of any type, such as a strain gage type pressure sensor 343, a piezoresistive pressure sensor 343, a capacitive pressure sensor 343, a piezoelectric pressure sensor 343, a differential transformer type pressure sensor 343, an optical pressure sensor 343, and a thermocouple pressure sensor 343, which is not limited herein.

The valve assembly 350 is a component in the pressure gauge 300 that is configured to physically control whether the air in the gas tank 400 is guided into the lumen. The valve assembly 350 may be disposed inside the housing 320 and connected to the lumen and the gas tank 400. The pressure control assembly 360 is configured to control the opening and closing of the valve assembly 350. The control unit is responsible for giving an instruction to the pressure control assembly, thus instructing the pressure control assembly 360 to control the valve assembly 350. When the valve assembly 350 is opened, the air in the gas tank 400 is allowed to enter the lumen. When the valve assembly 350 is closed, the connection passage between the gas tank 400 and the lumen is blocked and thus the air in the gas tank 400 cannot enter the lumen.

The valve assembly 350 includes a first gas channel 351, a second gas channel 352, a piston 353, and a piston driver 357. The first gas channel 351 includes a first end 351-1 and a second end 351-2. The second gas channel 352 includes a third end 352-1 and a fourth end 352-2. The first end 351-1 is communicated with the gas tank 400. The second end 351-2 is communicated with the third end 352-1. The fourth end third end 352-2 is communicated with the lumen. Therefore, the air in the gas tank 400 may enter the lumen through the first gas channel 351 and the second gas channel 352.

In some embodiments, the second end 351-2 and the third end 352-1 may be disposed integrally. That is, the second end 351-2 and the third end 352-1 may coincide. The first end 351-1 is detachably connected with the gas tank 400. The detachable connection may be threaded connection, snap-fit connection, or other forms of connection, which is not limited herein. The fourth end 352-2 is detachably connected with the lumen. The detachable connection may be threaded connection, snap-fit connection, or other forms of connection, which is not limited herein. Thus, the air in the gas tank 400 may enter the lumen sequentially through the first end 351-1, the second end 351-2, the third end 352-1, and the fourth end 352-2.

The second gas channel 352 and the pressure measurement channel 341 may be both disposed within the second mounting opening 310, and the second gas channel 352 and the pressure measurement channel 341 are spaced apart. In this way, even though the air pressure in the second gas channel 352 is high during inflation, the pressure of the air in the pressure measurement channel 341 is not affected because the second gas channel 352 and the pressure measurement channel 341 are spaced apart, such that a detection result is accurate.

If an axis direction of the gas tank 400 is parallel to a spoke direction of the hub, i.e., the axis of the gas tank 400 is perpendicular to the tire 230, the directions of the first gas channel 351 and the second gas channel 352 are parallel. Otherwise, as shown in FIG. 3, since the axis of the gas tank 400 is not parallel to the spoke direction of the hub (i.e., the axial direction of the gas tank 400 is not perpendicular to the tire 230), the second gas channel 352 needs to have a preset angle of not 180° with the first gas channel 351. According to the axis direction of the gas tank 400, the preset angle may be 60°, 70°, 80°, 90°, 100°, 110°, 120°, etc.

In order to physically control whether the air in the gas tank 400 is guided into the lumen, the valve assembly 350 further includes the piston 353 and the piston driver 357. The piston 353 is slidably disposed at least partially within the second gas channel 352 and is movable between a first position and a second position. In particular, the first gas channel 351 is communicated with the second gas channel 352. There is a region with an inner diameter greater than an outer diameter of the piston 353 at a position where the first gas channel 351 is connected with the second gas channel 352, and the position of the piston 353 in this region is referred to as the first position. Moreover, the piston 353 is slidable within the second gas channel 352 and adapted to an inner diameter of the second gas channel 352, and the position of the piston 353 within the second gas channel 352 is referred to as the second position.

When the piston 353 is located in the first position, the piston 353 leaves the region of the second gas channel 352 where the first gas channel 351 is connected with the second gas channel 352; the first gas channel 351 is communicated with the second gas channel 352; the second gas channel 352 is opened; and the air in the gas tank 400 may enter the lumen sequentially through the first gas channel 351 and the second gas channel 352. When the piston 353 is located in the second position, the piston 353 is located in the second gas channel 352. Although the air in the gas tank 400 can enter the valve assembly 350 through the first end 351-1, since the piston 353 closes the second gas channel 352 to block the second gas channel 352 from the first gas channel 351, the air cannot enter the lumen through the second gas channel 352, thus finishing inflation.

In addition, the valve assembly 350 further includes a limiting rod 354 and a limiting groove 355. The limiting rod 354 is fixedly connected with the piston 353. The limiting groove 355 is adapted to the limiting rod 354. The adaptation may be adaptation in shape and size. The limiting groove 355 includes a first limit and a second limit. When the piston 353 moves to the first position, the limiting rod 354 is located at the first limit. When the piston 353 moves to the second position, the limiting rod 354 is located at the second limit.

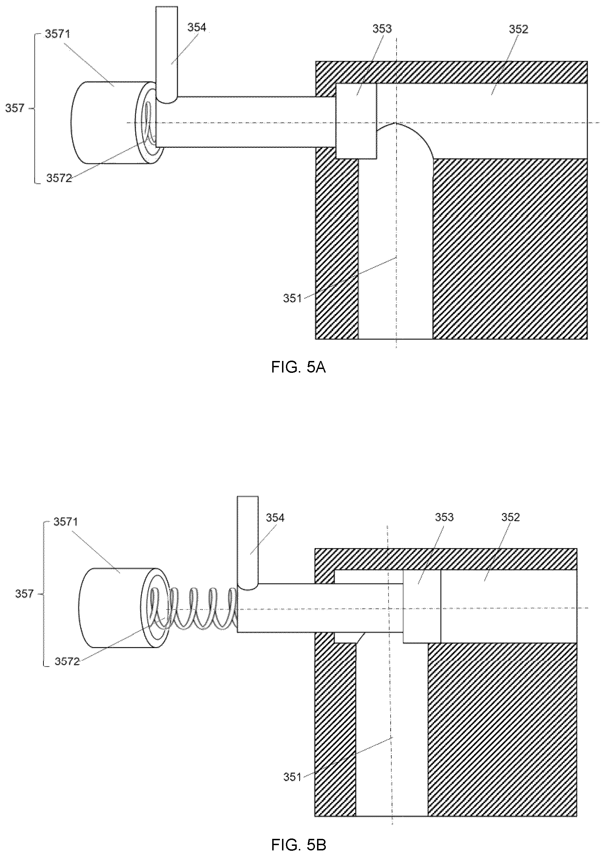

FIGs. 5A-5B illustrate schematic diagrams of driving a piston to move by a piston driver provided according to some embodiments of the present application. As shown in FIG. 5, in order to enable the piston 353 to automatically open or close the second gas channel 352, the piston driver 357 may include an elastic element 3572 and an electromagnet 3571 and is electrically connected with the pressure control assembly 360 to be controlled by the pressure control assembly 360. The electromagnet 3571 is electrically connected with the pressure control assembly 360 so that the electromagnet 3571 can be controlled by the pressure control assembly 360 to be automatically powered on or off. The elastic element 3572 provides an elastic force for the piston 353 to push the piston 353 to the second position, i.e., the position where the second gas channel 352 is closed (FIG. 5B). The electromagnet 3571 is powered on to generate an electromagnetic force that can overcome the elastic force of the elastic element 3572, pushing the piston 353 to the first position, i.e., the position where the second gas channel 352 is opened (FIG. 5A). In particular, when the pressure control assembly 360 controls the valve assembly 350 to be opened based on a target instruction, the pressure control assembly 360 controls the electromagnet 3571 to be powered on to generate the electromagnetic force, and the electromagnetic force overcomes the elastic force of the elastic element 3572, pushing the piston 353 to the first position (FIG. 5A), such that the second gas channel 352 is opened, allowing the air in the gas tank 400 to enter the lumen through the valve assembly 350 to realize automatic inflation. When the pressure control assembly 360 controls the valve assembly 350 to be closed based on a target instruction, the pressure control assembly 360 controls the electromagnet 3571 to be powered off, and the electromagnetic force disappears. At this point, the elastic force of the elastic element 3572 acts again to push the piston 353 back to the second position (FIG. 5B), such that the second gas channel 352 is closed to finish inflation.

The pressure control assembly 360 may be disposed on the circuit board 330 and electrically connected with the pressure measurement assembly 340. In particular, the pressure control assembly 360 may be electrically connected with the pressure sensor 343 by a cable so that the pressure control assembly 360 can receive a target pressure detected by the pressure sensor 343. The pressure control assembly 360 may be electrically connected with the control unit to transmit the target pressure to the control unit. After the control unit receives the target pressure, a target instruction may be sent to the pressure control assembly 360 based on the target pressure. The pressure control assembly 360 controls the valve assembly 350 to open or close the second gas channel 352 based on the target instruction sent by the control unit. The pressure control assembly 360 may be wirelessly connected with the control unit by means of a short-range data transmission technology. In particular, the pressure control assembly 360 may be connected with the control unit by a meter-scale wireless data transmission technology. The meter-scale wireless data transmission technology is a wireless transmission technology with an effective wireless communication distance from several millimeters to 10 meters, such as near field communication, Bluetooth low energy (Ble), infrared data association (IrDA), and magnetic induction communication. In the case where the scooter 001 includes a plurality of pressure gauges 300, the pressure control assembly 360 of each pressure gauge 300 may be in communication connection with the control unit to realize control of the control unit on the plurality of pressure control assemblies 360.

An automatic inflation process is described below.

After the wheel 200, the pressure gauge 300, the gas tank 400 and the control unit are connected, and the pressure gauge 300 may periodically detect a target pressure of target air in the wheel 200 and transmit the target pressure to the control unit. The control unit may receive the target pressure detected by the pressure gauge 300 and send a target instruction to the pressure gauge 300 based on the target pressure. The pressure gauge 300 controls whether the air in the gas tank 400 is guided into the tire based on the target instruction sent by the control unit.

In normal cases, the air pressure in the tire gradually decreases over time. Therefore, a pressure threshold may be set to determine whether a decreasing rate of the air pressure of the tire is normal. When the air pressure (i.e., the target pressure) in the tire is higher than the pressure of the threshold, it means that the pressure of the tire is normal. Therefore, the control unit only needs to periodically detect the target pressure while preventing the air in the gas tank 400 from being guided into the tire. In this case, the pressure gauge 300 detects the target pressure at a second interval.

When the target pressure falls below the threshold, two scenarios may occur. One scenario is that the air pressure inside the tire decreases due to natural loss, causing the target pressure to drop below the threshold, in which case the tire needs to be inflated. The other scenario is an abnormal condition with the tire, such as a puncture, where the target pressure rapidly drops below the threshold. In this case, what needs to be done is not to inflate the tire but to remind the rider to repair it.

In order to determine whether the tire has an abnormal leak, when the target air pressure is lower than the threshold, the detection frequency needs to be increased, thus the target pressure is detected at a first interval and then the decreasing rate of the target air pressure is calculated. The first interval is shorter than the second interval, that is, the target pressure is lower than the threshold pressure, and the time interval of detection of the pressure gauge 300 is shorter and the detection frequency is higher such that the timing of starting/stopping inflation is determined accurately. It can be appreciated that the threshold pressure and a preset rate can be set according to specific situations, which is not limited herein. When the control unit determines that the target pressure is lower than the threshold pressure and the decreasing rate of the target pressure is lower than a preset rate, a target instruction is sent to instruct the pressure gauge 300 to allow the air in the gas tank 400 to be guided into the wheel for inflating the wheel. When inflating, the control unit still monitors the target pressure at the first interval or detects the target pressure at a shorter third period. When the control unit determines that the target pressure is higher than or equal to the threshold pressure again, a target instruction is sent to instruct the pressure gauge 300 to stop guiding the air in the gas tank 400, thereby finishing inflation. At this point, the pressure gauge 300 recovers to detect the target pressure at the second interval.

When the control unit determines that the target pressure is lower than the threshold pressure and the decreasing rate is higher than the preset rate, the control unit alarms to prompt the rider that air leaks from the tire.

In a specific implementation, when the control unit determines that the target pressure is lower than the threshold pressure, a target instruction is sent to instruct the pressure control assembly 360 to open the second gas channel 352 such that the air in the gas tank 400 is guided into the lumen, thereby realizing automatic inflation of the wheel. In some embodiments, when the control unit determines that the target pressure is lower than the threshold pressure and the decreasing rate of the target pressure is lower than the preset rate, a target instruction is sent to instruct the pressure control assembly 360 to open the second gas channel 352 such that the air in the gas tank 400 is guided into the lumen, thereby realizing automatic inflation of the wheel. When the control unit determines that the decreasing rate of the target pressure is higher than the preset rate, the control unit alarms to prompt the rider that air leaks from the tire.

When the control unit determines that the target pressure is higher than or equal to the threshold pressure, a target instruction is sent to instruct the pressure control assembly 360 to close the second gas channel 352, thereby finishing inflation. The threshold pressure and the preset rate can be set according to specific situations, which is not limited herein. It can be appreciated that the frequency at which the pressure control assembly 360 sends the target pressure to the control unit exhibits a periodicity, i.e., the pressure control assembly 360 can send the target pressure to the control unit at preset time intervals. In particular, when the target pressure is lower than the threshold pressure, the pressure control assembly 360 detects the target pressure at the first interval. When the target pressure is higher than or equal to the threshold pressure, the pressure control assembly 360 detects the target pressure at the second interval. The first interval is shorter than the second interval, i.e., when the target pressure is lower than the threshold pressure, the time interval of detection of the pressure gauge 300 is shorter and the detection frequency is higher.

In conclusion, this specification provides a scooter 001. A target pressure detected by a pressure measurement assembly 340 is transmitted to a control unit by a pressure control assembly 360. The control unit sends a target instruction to the pressure control assembly 360 based on the target pressure. The pressure control assembly 360 controls a valve assembly 350 to open or close a second gas channel 352 based on the target instruction sent by the control unit. Thus, continuous monitoring of the target pressure is realized, and when the target pressure is found to drop, a reinflation measure is automatically taken without user intervention, ensuring that the wheel is always in the optimal state.

The foregoing describes the specific embodiments of the present application. Other embodiments fall within the scope of the appended claims. In some cases, the actions or steps described in the claims may be performed in sequences different from those in the embodiments and still achieve expected results. In addition, the processes depicted in the accompanying drawings do not necessarily require the specific orders or sequential orders shown for achieving the expected results. In some implementations, multitasking and parallel processing are also possible or may be advantageous.

In summary, after reading this detailed application, those skilled in the art can understand that the foregoing detailed application may be presented by way of example only, and may not be limited. Although there is no clear description, those skilled in the art can understand that the present application intends to cover various reasonable changes, improvements, and modifications of the embodiments. These changes, improvements, and modifications are intended to be proposed in the present application and are within the spirit and scope of the exemplary embodiments of the present application.

In addition, some specific terms in the present application have been used to describe the embodiments of the present application. For example, "one embodiment", "an embodiment", and/or "some embodiments" mean that a specific feature, structure, or characteristic described in combination with the embodiment may be included in at least one embodiment of the present application. Therefore, it can be emphasized and should be understood that two or more references to "an embodiment" or "one embodiment" or "an alternative embodiment" in various parts of the present application do not necessarily all refer to the same embodiment. In addition, specific feature, structure, or characteristic may be appropriately combined in one or more embodiments of the present application.

It should be understood that in the foregoing description of the embodiments of the present application, to help understand a feature, and for the purpose of simplifying the present application, the present application sometimes combines various features in a single embodiment, a drawing, or description thereof. However, this does not mean that the combination of these features is necessary. It is entirely possible for those skilled in the art to extract some of the features as a single embodiment for understanding when reading the present application. In other words, the embodiments in the present application can also be understood as an integration of multiple sub-embodiments. The content of each sub-embodiment is also true when it is less than all the characteristics of a single previously disclosed embodiment.

Each patent, patent application, patent application publication, and other materials referenced in this disclosure, such as articles, books, specifications, publications, documents, literature, etc. (excluding any related historical examination documents), are incorporated by reference for all purposes relevant to this disclosure, including in the description and claims of this disclosure. However, in the event of any inconsistency or conflict between the descriptions, definitions, and/or terms used in these materials and those used in this disclosure, the terms used in this disclosure shall prevail.

Finally, it should be understood that the embodiment of the present application provided herein is an explanation of the principle of the embodiment of the present application. Other modified embodiments are also within the scope of the present application. Therefore, the embodiments disclosed in the present application are merely examples rather than limitations. Those skilled in the art can adopt alternative configurations according to the embodiments in the present application to implement the present application in the present application. Therefore, the embodiments of the present application are not limited to those explicitly described in the present application.

## Claims

1. A scooter, comprising:
a plurality of wheels, wherein each of the wheels includes a hub and a tire;
a body comprising a foot deck, wherein the body is rotatably connected to each of the wheels;
a gas tank disposed on the hub; and
a pressure gauge disposed on the hub and connected with the gas tank and a lumen of the tire, wherein the pressure gauge includes:
a pressure measurement assembly connected with the lumen to detect a target pressure of air in the lumen;
a valve assembly connected to the lumen and the gas tank and including a second gas channel;
a pressure control assembly electrically connected with the pressure measurement assembly and the valve assembly and in communication connection with a control unit of the scooter,
and configured to periodically transmit the target pressure to the control unit and control the valve assembly to open or close the second gas channel based on a target instruction sent by the control unit; and
the control unit disposed on the scooter and in communication connection with the pressure control assembly and configured to receive the target pressure and send the target instruction to the valve assembly based on the target pressure.

2. The scooter according to claim 1, **characterized in that** when the target pressure is lower than a threshold pressure, the target instruction instructs the pressure control assembly to open the second gas channel, such that air in the gas tank is guided into the lumen.

3. The scooter according to claim 1 or 2, **characterized in that** when the target pressure is higher than or equal to the threshold pressure, the target instruction instructs the pressure control assembly to close the second gas channel, such that the air in the gas tank is prevented from being guided into the lumen.

4. The scooter according to any one of claims 1 to 3, **characterized in that** when the target pressure is lower than a threshold pressure and a decreasing rate of the target pressure is lower than a preset rate, the target instruction instructs the pressure control assembly to open the second gas channel, such that the air in the gas tank is guided into the lumen.

5. The scooter according to claim 4, **characterized in that** when the decreasing rate of the target pressure is higher than the preset rate, the control unit alarms to prompt a rider that air leaks from the tire.

6. The scooter according to any one of claims 1 to 5, **characterized in that**:
when the target pressure is lower than a threshold pressure, the pressure control assembly detects the target pressure at a first interval; and
when the target pressure is higher than the threshold pressure, the pressure control assembly detects the target pressure at a second interval; wherein
the first interval is shorter than the second interval.

7. The scooter according to any one of claims 1 to 6, **characterized in that** the pressure control assembly is wirelessly connected with the control unit by a short-range data transmission technology.

8. The scooter according to any one of claims 1 to 7, **characterized in that** the valve assembly further includes:
a first gas channel including a first end and a second end, wherein the first end is communicated with the gas tank;
the second gas channel forming a preset angle with the first gas channel, the second gas channel including a third end and a fourth end, the second end being communicated with the third end, and the fourth end being communicated with the lumen; and
a piston slidably disposed at least partially within the second gas channel and movable between a first position and a second position, wherein
in the second position, the piston is located within the second gas channel, such that the second gas channel is blocked from the first gas channel and the second gas channel is closed, and
in the first position, the piston leaves the second gas channel, such that the second gas channel is communicated with the first gas channel and the second gas channel is opened.

9. The scooter according to claim 8, **characterized in that** the valve assembly further includes an elastic element and an electromagnet;
the elastic element is configured to provide an elastic force to push the piston to the second position; and
the electromagnet is configured to provide an electromagnetic force after being powered on to push the piston to the first position.

10. The scooter according to claim 8 or 9, **characterized in that** the first end is detachably connected with the gas tank; the second end and the third end are disposed integrally; and the fourth end is detachably connected with the lumen.

11. The scooter according to any one of claims 8 to 10, **characterized in that** the preset angle is 90°.

12. The scooter according to any one of claims 8 to 11, **characterized in that** the valve assembly further includes:
a limiting rod fixedly connected with the piston; and
a limiting groove adapted to the limiting rod and including a first limit and a second limit,
wherein when the piston moves to the first position, the limiting rod is located at the first limit,
and when the piston moves to the second position, the limiting rod is located at the second limit.

13. The scooter according to any one of claims 1 to 12, **characterized in that** the pressure measurement assembly includes:
a pressure measurement channel communicated with the lumen; and
a pressure sensor disposed on a side of the pressure measurement channel facing the pressure gauge and configured to detect an air pressure in the pressure measurement channel.

14. The scooter according to claim 13, **characterized in that** the hub includes a first mounting opening communicated with the lumen; and
the pressure gauge further includes:
a second mounting opening connected with the first mounting opening, and
the second gas channel and the pressure measurement channel are disposed within the second mounting opening, wherein the second gas channel and the pressure measurement channel are spaced apart.
